Europäisches Patentamt

European Patent Office

Office européen des brevets

(19)

(11) Publication number: **0 110 061**
A1

# (12) EUROPEAN PATENT APPLICATION

(21) Application number: **83109965.0**

(22) Date of filing: **05.10.83**

(51) Int. Cl.³: **F 16 K 15/18**

(30) Priority: **29.10.82 IT 2401082**

(43) Date of publication of application: **13.06.84**
Bulletin **84/24**

(84) Designated Contracting States: **AT BE CH DE FR GB LI LU NL SE**

(71) Applicant: **RACI S.r.l., Piazza Duse, 2, I-20100 Milano (IT)**
Applicant: **Zanichelli, Gianni, Via Leopardi 242/D, Sesto S. Giovanni (Milano) (IT)**

(72) Inventor: **Zanichelli, Gianni, Via Leopardi 242/D, Sesto S. Giovanni Milano (IT)**

(74) Representative: **Gervasi, Gemma et al, Studio Brevetti e Marchi NOTARBARTOLO & GERVASI 33, Viale Bianca Maria, I-20122 Milano (IT)**

(54) **Improvements in shut-off and check valves.**

(57) The valve according to the invention is of the shut-off and check type, and is provided internally with a vertically mobile spherical seal member (8) which cooperates with the valve seat (13), the shut-off being effected by means of a threaded spindle (3) which when rotated in a suitable direction causes the ball (8) to compress against its seat (13), so interrupting flow.

ACTORUM AG

# IMPROVEMENTS IN SHUT-OFF AND CHECK VALVES.

This invention relates to a shut-off and check valve of the straight-way or right-angled way type, provided with a flanged or threaded body having a machined seat or replaceable gasket, and with a central block connected to said body and provided with a central threaded spindle, of which one end is fitted with a hand wheel and the other end is provided with a slightly seat carrying a replaceable gasket.

The valve automatically closes when the upstream pressure exceeds the downstream pressure, in which case the ball (spherical seal member) of plastics material is compressed by said pressure on to the body seat, so interrupting passage of the fluid.

This is made possible by the fact that the hemispherical surface area of the ball is greater than the surface area of the lower passage seat.

The valve can be shut-off by screwing the threaded spindle completely downwards into the body, in which case the spindle gasket compresses the ball into its seat, so interrupting passage of the fluid.

When the fluid passes through the valve, the ball is displaced from its seat, so allowing flow.

The valve according to the invention is further illustrated by way of non-limiting example on the following drawings, in which:

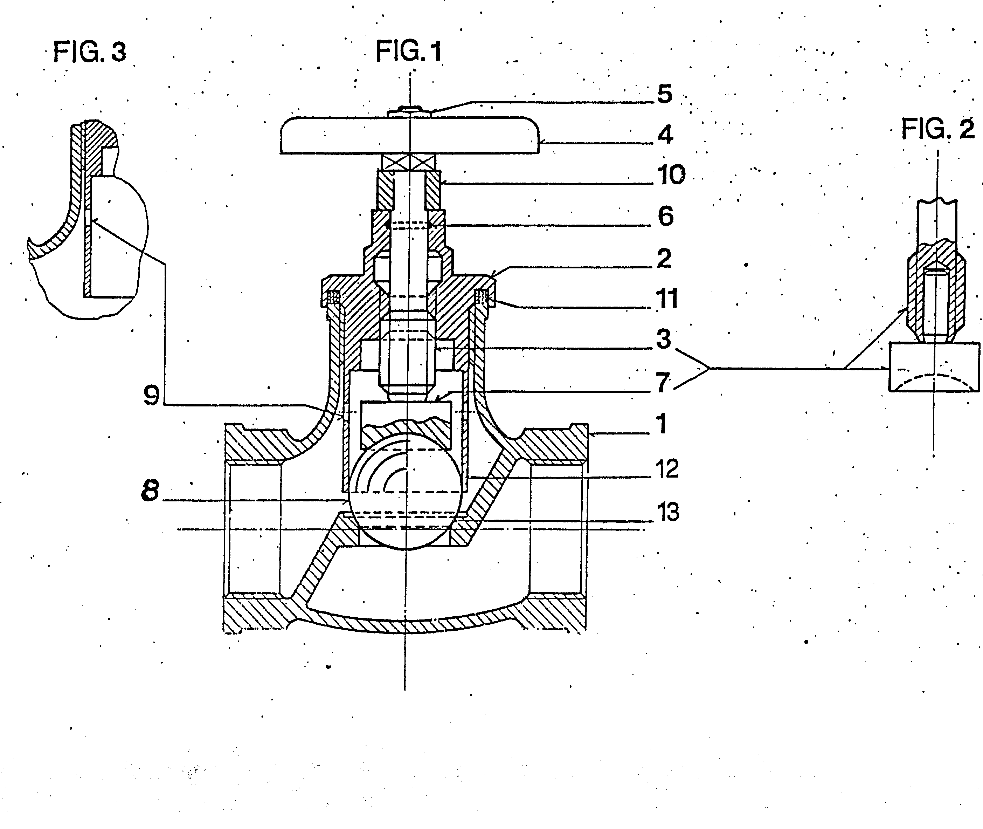

- Figure 1 is a vertical axial section through a valve according to the invention;
- Figure 2 is a partial section through the valve of Figure 1 to an enlarged scale;
- Figure 3 is a further partial section through the valve of Figure 1, to an enlarged scale.

On the drawings, the reference numeral 1 indicates the body, which is threaded (or flanged) at its ends, the reference numeral 2 indicates the central block comprising a bush 12 extended in order to contain and guide the ball 8 and provided with a spindle 3 operated by the hand wheel 4, which is fitted with a fixing nut 5, the reference numeral 6 indicate the O-ring, the reference numeral 7 indicates the suitably shaped guide shoe for the ball 8, and the reference numeral 9 indicates the holes or apertures through which the fluid passes into the extended bush in order to counter-balance the pressure at the top of the ball 8. The position of the holes (2/3 of the distance along the extended bush), their diam.ter (for example in the case of a 1" valve they have a $\emptyset$ of 3.2 mm), and their number (2) are all of importance.

The reference numeral 10 indicates the stop bush for limiting the stroke of the threaded operating spindle, and the reference numeral 11 illustrates the seal gasket between the body and cover.

Said hole positions and dimensions can be varied as described hereinafter.

The valve can be constructed of bronze, steel etc., and its gaskets can be of plastics material such as nylon, teflon, polyester etc.

It is apparent that many modifications and additions can be made to the valve heretofore described.

In particular, the valve could be of the right-angled way type, with the seal seats for the ball either of plastics material (in the form of an insert) or of suitable metal. It has been found that the check ball operates faultlessly when the downstream pressure exceeds the upstream pressure even only slightly.

In this respect, it has been found that when the elastomer ball rests on its horizontal seat, the right circular cone which has its vertex coinciding with the centre of the ball and its base coinciding with the plane of its seat must have a cone angle which is less than 180°, and preferably between 60 and 140°. It has been found that this gives smoother operation of the check ball, which reflects favourably on its life.

With regard to the diameter of the holes, their position and number indicated heretofore, experiments have been carried out from which it has been found that said holes must be positioned in the upper half of the bush, and that their diameter can vary from 1 to 6 mm.

These holes can be one or more in number, and in this respect it has been found that if the number of holes is excessive, strong vibration can occur during the operation of the valve.

PATENT CLAIMS

1. A shut-off and check valve, characterised by being provided internally with a mobile spherical seal member (8) which is guided by a guitable bush (12) comprising one or more holes (9), and cooperates with the valve seat (13), the shut-off being effected by means of a threaded spindle (3) which when rotated in a suitable direction causes the ball (8), of plastics material, to compress against its seat (13).

2. A valve as claimed in claim 1, characterised by being of the straightway type in which the spherical seal member (8) is mobile vertically.

3. A valve as claimed in the preceding claims, characterised in that the spherical seal member (8) is partially or totally contained and guided in a suitable bush (12) provided with holes (9) disposed in the upper part of the extended bush (12).

4. A valve as claimed in the preceding claims, characterised in that the holes (9) have a diameter of between 1 and 6 mm.

5. A valve as claimed in any one of the preceding claims, wherein the seat of the spherical seal member (8) is of metal.

6. A valve as claimed in any one of the preceding claims, characterised in that when the spherical seal member (8) of plastics material rests on its seat, the right circular cone which has its vertex coinciding with the centre of the ball (8) and has its base coinciding with the plane of the seat (13) must have a cone angle which is less than 180° and preferably 60° and 140°.

7.  A valve as described and illustrated by the accompanying drawing.

FIG. 3 FIG. 1 FIG. 2

5
4
10
6
2
11
3
7
1
12
13

9

8

0110061

European Patent
Office

**EUROPEAN SEARCH REPORT**

Application number

EP 83 10 9965

| | **DOCUMENTS CONSIDERED TO BE RELEVANT** | | |
|---|---|---|---|
| Category | Citation of document with indication, where appropriate, of relevant passages | Relevant to claim | CLASSIFICATION OF THE APPLICATION (Int. Cl. ³) |
| A | US-A-1 875 574  (DUNCAN) <br><br> * Page 1, line 27 - page 2, line 22 * | 1-3,5, 7 | F 16 K  15/18 |
| A | FR-A-1 352 396  (LOVE) <br><br> * Whole document * | 1-3,5, 7 | |
| A | US-A-1 918 544  (HOUSE) <br><br> * Whole document * | 1,2,5, 7 | |
| A | DE-C-  664 238  (MILARCH) <br><br> * Whole document * | 1,2,5, 7 | |
| A | CA-A-1 107 601  (HODGSON) <br> * Page  4, line 7 - page 5, line 23 * | 1,5,7 | **TECHNICAL FIELDS SEARCHED (Int. Cl. ³)** <br><br> F 16 K  15/00 |
| A | US-A-2 278 715  (STOYKE) <br><br> * Page 1, right-hand column, line 32 - page 2, left-hand column, line 38 * | 1-3,5, 7 | |

The present search report has been drawn up for all claims

| Place of search THE HAGUE | Date of completion of the search 16-01-1984 | Examiner VERELST P.E.J. |
|---|---|---|

EPO Form 1503. 03.82